# EUROPEAN PATENT SPECIFICATION

(11) **EP 4 646 869 B1**
(45) Date of publication and mention of the grant of the patent: **18.03.2026**
(21) Application number: 24700341.1
(22) Date of filing: 05.01.2024
(51) Int. Cl.: H04W 28/02, H04W 28/24

(54) **EXTENDED REALITY QOS FLOW INDICATION TO DIFFERENTIATE THE STANDARDIZED 3GPP QOS CHARACTERISTICS**
QOS-FLUSSANZEIGE DER ERWEITERTEN REALITÄT ZUR DIFFERENZIERUNG STANDARDISIERTER 3GPP-QOS-EIGENSCHAFTEN
INDICATION DE FLUX QOS DE RÉALITÉ ÉTENDUE POUR DIFFÉRENCIER LES CARACTÉRISTIQUES DE QOS 3GPP NORMALISÉES

(30) Priority: 06.01.2023 US 202363437500 P
(43) Date of publication of application: 12.11.2025
(73) Proprietor: Telefonaktiebolaget LM Ericsson (publ), 164 83 Stockholm (SE)
(72) Inventor: SHI, Nianshan, 176 74 Järfälla (SE); SCHLIWA-BERTLING, Paul, 590 71 Ljungsbro (SE); VESELY, Alexander, 8330 Feldbach (AT)
(74) Representative: Ericsson
(86) International application number: PCT/IB2024/050110
(87) International publication number: WO 2024/147110

(56) References cited:
- US-A1- 2021 243 641
- SHABNAM SULTANA ET AL: "KI #4, sol #8: update to remove ENs and clarifying procedures and impacts", vol. 3GPP SA 2, no. Online; 20220516 - 20220520, 24 May 2022 (2022-05-24), XP052168609, Retrieved from the Internet <URL:https://www.3gpp.org/ftp/tsg_sa/WG2_Arch/TSGS2_151E_Electronic_2022-05/Docs/S2-2205265.zip> [retrieved on 20220524]

## Description

### Technical Field

The present disclosure relates to a wireless communications system and, more specifically, Quality of Service (QoS) in a wireless communications system.

### Background

eXtended Reality (XR) and Cloud Gaming are some of the most important 5^{th} Generation (5G) media applications under consideration in the industry. XR is an umbrella term for different types of realities and refers to all real-and-virtual combined environments and human-machine interactions generated by computer technology and wearables. It includes representative forms such as Augmented Reality (AR), Mixed Reality (MR), and Virtual Reality (VR) as well as the areas interpolated among them.

One specific aspect to be considered is the role of Edge Computing as a network architecture to enable XR and Cloud Gaming. Edge Computing is a concept that enables cloud computing capabilities and service environments to be deployed close to the cellular network. It promises several benefits such as lower latency, higher bandwidth, reduced backhaul traffic, and prospects for several new services on application architecture for enabling Edge Applications (see 3^{rd} Generation Partnership Project (3GPP) Technical Report (TR) 23.758 V17.0.0). Edge Applications are expected to take advantage of the low latencies enabled by 5G and the Edge network architecture to reduce the end-to-end application-level latencies. Edge Computing is a valuable enabler which should be considered to help 5G systems achieve the required performance to enable XR and Cloud Gaming.

5G New Radio (NR) is designed to support applications demanding high throughput and low latency in line with the requirements posed by the support of XR and Edge Computing applications in NR networks. XR and Edge Computing are services enabled by Rel-15 NR networks.
Comparing to Ultra-Reliable Low-Latency Communication (URLLC) type of services, with which the extreme requirement down to 1 millisecond (ms) and reliability to 10-5, edge-based XR often has relaxed latency requirement with minimum 5ms up to a couple of 10's of milliseconds and a reliability requirement up to 10-4. However, a much higher bite rate is required for XR services, with larger file sizes of, e.g., 10 kilobytes (KB) -100KB due to codec inefficiency.

The document US 2021/243641 A1 relates to time-aware QoS and to techniques for providing time-aware QoS in communication systems such as 5G NR.

The 3GPP standard contribution S2-2205265 with title "KI #4, sol #8: update to remove ENs and clarifying procedures and impacts" relates to Protocol Data Unit (PDU) Set integrated packet handling

### Summary

The present invention is defined by the independent claims. Further embodiments are set forth in the dependent claims.

### Brief Description of the Drawings

The accompanying drawing figures incorporated in and forming a part of this specification illustrate several aspects of the disclosure, and together with the description serve to explain the principles of the disclosure.
Figure 1 illustrates one example of a cellular communications system in which embodiments of the present disclosure may be implemented;
Figures 2 and 3 illustrate example embodiments of the cellular communications system of Figure 1 in which the cellular communications system is a 5^{th} Generation System (5GS);
Figure 4 illustrates one example implementation of an eXtended Reality (XR) Quality of Service (QoS) indicator, in accordance with an exemplary embodiment of the present disclosure;
Figure 5 illustrates the operation of a core network node and a Radio Access Network (RAN) node in accordance with at least some embodiments of the present disclosure;
Figure 6 illustrates a procedure performed by a RAN node having a split architecture, in accordance with one embodiment of the present disclosure;
Figure 7 illustrates a procedure performed in a central unit (CU) part of a RAN node where the CU part has a split user plane (UP) and control plane (CP) architecture, in accordance with one embodiment of the present disclosure; and
Figures 8, 9, and 10 are schematic block diagrams of example embodiments of a network node.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

**Radio Node:** As used herein, a "radio node" is either a radio access node or a wireless communication device.

**Radio Access Node:** As used herein, a "radio access node" or "radio network node" or "radio access network node" or "RAN node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node/server in a core network or any node/server that implements one or more core network functions. Some examples of core network functions implemented or hosted in a node/server include 5G Network Functions (NFs),such as an Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like. Other examples include 4G functionalities such as for e.g., a Mobility Management Entity (MME), a Packet Data Network Gateway (P-GW), a Service Capability Exposure Function (SCEF), a Home Subscriber Server (HSS), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

There currently exist certain challenge(s) in 5G/NR. Currently, in NR, Packet Delay Budget (PDB) and Packet Error Rate (PER) are defined Quality of Service (QoS) parameters. However, for XR services, Protocol Data Unit (PDU)-Set Delay Budget (PSDB) and PDU-Set Error Rate (PSER) are desired QoS parameters.

Currently in NR, the QoS models consist of standardized QoS parameters, pre-configured QoS parameters, and dynamic QoS parameters. The standardized or pre-configured QoS parameters are indicated by the 5^{th} Generation (5G) QoS Indicator (5QI) with the QoS characteristics defined in a table by 3GPP Technical Specification (TS) 23.501 (see, e.g., V16.7.0). The dynamic QoS characteristics are signaled from the core network (CN) to the Next Generation Radio Access Network (NG-RAN) node. To support XR service, if the standardized or pre-configured 5QIs are extended to include PSDB and PSER, it becomes ambiguous for the NG-RAN node to know when it shall use PSDB and PSER, or PDB or PER for a given 5QI. The in-band PDU set related information over the User Plane cannot be used since the QoS requirements are firstly checked at the control plane before the User Plane is setup.

Certain aspects of the present disclosure and their embodiments may provide solutions to the aforementioned or other challenges and are described in the context of 5G/NR, but not limited thereto. When PSDB and PSER are extended for the standard or preconfigured 5QI (within the existing table defined in 3GPP specifications, or a new 5QI), the CN (e.g., a core network node) signals to the NG-RAN node that, for the given 5QI, the NG-RAN node should use PSDB and PSER instead of PDB and PER in the 5QI table. When the PSDB and PSER are signaled explicitly from the CN to the NG-RAN node, the CN makes clear that the set of parameters are only valid for the dynamic 5QI. Alternatively, it (e.g., the CN node) indicates that the new values are to overwrite any early values.

Embodiments of the present disclosure solve the issue of, when the standardized or pre-configured 5QI are extended with XR specific PSDB and PSER, how the NG-RAN node (e.g., gNodeB (gNB)) could identify if the service is the usual (legacy) or XR service.

Certain embodiments may provide one or more of the following technical advantage(s). Embodiments of the present disclosure may enable the NR QoS model to be used for the XR service with extended QoS parameters.

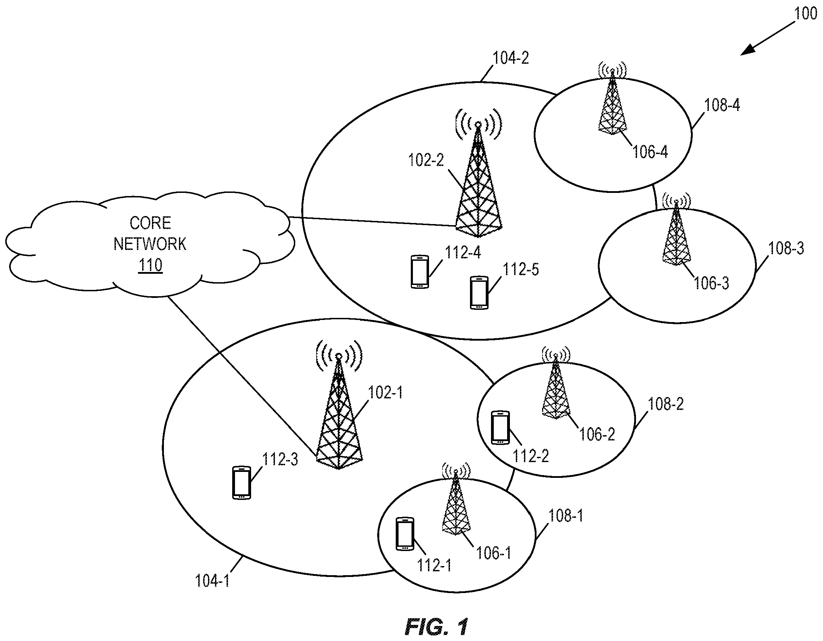

Figure 1 illustrates one example of a cellular communications system 100 in which embodiments of the present disclosure may be implemented. In the embodiments described herein, the cellular communications system 100 is a 5G system (5GS) including a Next Generation RAN (NG-RAN) and a 5G Core (5GC); however, the present disclosure is not limited thereto. Rather, the embodiments disclosed herein may be utilized in similar wireless communications systems such as, e.g., a 6^{th} Generation (6G) system. In this example, the RAN includes base stations 102-1 and 102-2, which in the 5GS include NR base stations (gNBs) and optionally next generation eNBs (ng-eNBs) (e.g., LTE RAN nodes connected to the 5GC), controlling corresponding (macro) cells 104-1 and 104-2. The base stations 102-1 and 102-2 are generally referred to herein collectively as base stations 102 and individually as base station 102. Likewise, the (macro) cells 104-1 and 104-2 are generally referred to herein collectively as (macro) cells 104 and individually as (macro) cell 104. The RAN may also include a number of low power nodes 106-1 through 106-4 controlling corresponding small cells 108-1 through 108-4. The low power nodes 106-1 through 106-4 can be small base stations (such as pico or femto base stations) or RRHs, or the like. Notably, while not illustrated, one or more of the small cells 108-1 through 108-4 may alternatively be provided by the base stations 102. The low power nodes 106-1 through 106-4 are generally referred to herein collectively as low power nodes 106 and individually as low power node 106. Likewise, the small cells 108-1 through 108-4 are generally referred to herein collectively as small cells 108 and individually as small cell 108. The cellular communications system 100 also includes a core network 110, which in the 5G System (5GS) is referred to as the 5GC. The base stations 102 (and optionally the low power nodes 106) are connected to the core network 110.

The base stations 102 and the low power nodes 106 provide service to wireless communication devices 112-1 through 112-5 in the corresponding cells 104 and 108. The wireless communication devices 112-1 through 112-5 are generally referred to herein collectively as wireless communication devices 112 and individually as wireless communication device 112. In the following description, the wireless communication devices 112 are oftentimes UEs, but the present disclosure is not limited thereto.

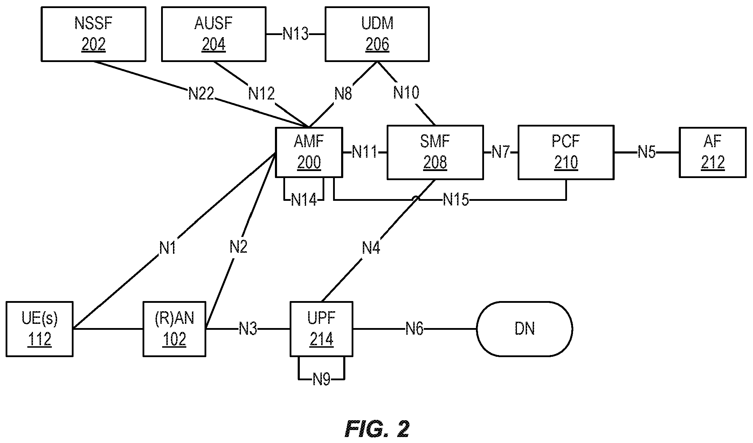

Figure 2 illustrates a wireless communication system represented as a 5G network architecture composed of core Network Functions (NFs), where interaction between any two NFs is represented by a point-to-point reference point/interface. Figure 2 can be viewed as one particular implementation of the system 100 of Figure 1.

Seen from the access side the 5G network architecture shown in Figure 2 comprises a plurality of UEs 112 connected to either a RAN 102 or an Access Network (AN) as well as an AMF 200. Typically, the R(AN) 102 comprises base stations, e.g. such as eNBs or gNBs or similar. Seen from the core network side, the 5GC NFs shown in Figure 2 include a NSSF 202, an AUSF 204, a UDM 206, the AMF 200, a SMF 208, a PCF 210, and an Application Function (AF) 212.

Reference point representations of the 5G network architecture are used to develop detailed call flows in the normative standardization. The N1 reference point is defined to carry signaling between the UE 112 and AMF 200. The reference points for connecting between the AN 102 and AMF 200 and between the AN 102 and UPF 214 are defined as N2 and N3, respectively. There is a reference point, N11, between the AMF 200 and SMF 208, which implies that the SMF 208 is at least partly controlled by the AMF 200. N4 is used by the SMF 208 and UPF 214 so that the UPF 214 can be set using the control signal generated by the SMF 208, and the UPF 214 can report its state to the SMF 208. N9 is the reference point for the connection between different UPFs 214, and N14 is the reference point connecting between different AMPs 200, respectively. N15 and N7 are defined since the PCF 210 applies policy to the AMF 200 and SMF 208, respectively. N12 is required for the AMF 200 to perform authentication of the UE 112. N8 and N10 are defined because the subscription data of the UE 112 is required for the AMF 200 and SMF 208.

The 5GC network aims at separating UP and CP. The UP carries user traffic while the CP carries signaling in the network. In Figure 2, the UPF 214 is in the UP and all other NFs, i.e., the AMF 200, SMF 208, PCF 210, AF 212, NSSF 202, AUSF 204, and UDM 206, are in the CP. Separating the UP and CP guarantees each plane resource to be scaled independently. It also allows UPFs to be deployed separately from CP functions in a distributed fashion. In this architecture, UPFs may be deployed very close to UEs to shorten the Round Trip Time (RTT) between UEs and data network for some applications requiring low latency.

The core 5G network architecture is composed of modularized functions. For example, the AMF 200 and SMF 208 are independent functions in the CP. Separated AMF 200 and SMF 208 allow independent evolution and scaling. Other CP functions like the PCF 210 and AUSF 204 can be separated as shown in Figure 2. Modularized function design enables the 5GC network to support various services flexibly.

Each NF interacts with another NF directly. It is possible to use intermediate functions to route messages from one NF to another NF. In the CP, a set of interactions between two NFs is defined as service so that its reuse is possible. This service enables support for modularity. The UP supports interactions such as forwarding operations between different UPFs.

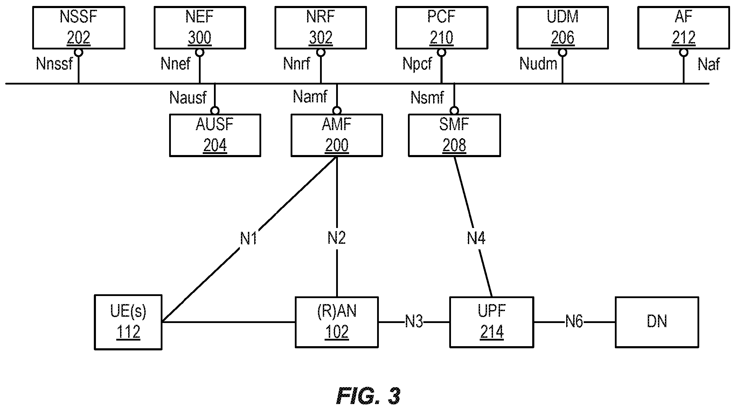

Figure 3 illustrates a 5G network architecture using service-based interfaces between the NFs in the CP, instead of the point-to-point reference points/interfaces used in the 5G network architecture of Figure 2. However, the NFs described above with reference to Figure 2 correspond to the NFs shown in Figure 3. The service(s) etc. that a NF provides to other authorized NFs can be exposed to the authorized NFs through the service-based interface. In Figure 3 the service based interfaces are indicated by the letter "N" followed by the name of the NF, e.g. Namf for the service based interface of the AMF 200 and Nsmf for the service based interface of the SMF 208, etc. The NEF 300 and the NRF 302 in Figure 3 are not shown in Figure 2 discussed above. However, it should be clarified that all NFs depicted in Figure 2 can interact with the NEF 300 and the NRF 302 of Figure 3 as necessary, though not explicitly indicated in Figure 2.

Some properties of the NFs shown in Figures 2 and 3 may be described in the following manner. The AMF 200 provides UE-based authentication, authorization, mobility management, etc. A UE 112 even using multiple access technologies is basically connected to a single AMF 200 because the AMF 200 is independent of the access technologies. The SMF 208 is responsible for session management and allocates Internet Protocol (IP) addresses to UEs. It also selects and controls the UPF 214 for data transfer. If a UE 112 has multiple sessions, different SMFs 208 may be allocated to each session to manage them individually and possibly provide different functionalities per session. The AF 212 provides information on the packet flow to the PCF 210 responsible for policy control in order to support QoS. Based on the information, the PCF 210 determines policies about mobility and session management to make the AMF 200 and SMF 208 operate properly. The AUSF 204 supports authentication function for UEs or similar and thus stores data for authentication of UEs or similar while the UDM 206 stores subscription data of the UE 112. The Data Network (DN), not part of the 5GC network, provides Internet access or operator services and similar.

An NF may be implemented either as a network element on a dedicated hardware, as a software instance running on a dedicated hardware, or as a virtualized function instantiated on an appropriate platform, e.g., a cloud infrastructure.

Now, the description turns to some particular embodiments of the present disclosure.

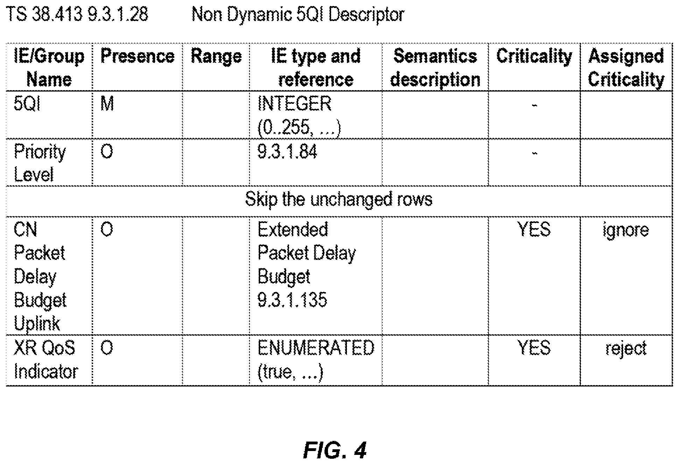

In one embodiment, the core network (CN) (e.g., a core network node or NF, for example a Session Management Function (SMF) via an AMF) indicates to a NG-RAN node (e.g., base station 102 such as, e.g., a gNB) that, for a given standardized or pre-configured 5G Quality of Service (QoS) Indicator (5QI), the NG-RAN node should use Protocol Data Unit (PDU)-Set Delay Budget (PSDB) and PDU-Set Error Rate (PSER) (e.g., instead of Packet Delay Budget (PDB) and Packet Error Rate (PER)) as it is XR service. If the CN does not provide this indication, the NG-RAN node would use the PDB and PER configured for the 5QI instead of the PSDB and PSER which may also be configured in the NG-RAN node for the 5QI. The NG-RAN node is hence instructed as to whether it should use PDB and PER for the 5QI or PSDB and PSER (when XR service). The implementation example refers to Figure 4. In this example, the indication is an "XR QoS Indicator" Information Element (IE), that is is assigned criticality "reject" meaning the NG-RAN node not supporting such XR service indicates to the CN that the XR service cannot be setup as it does not support the service based on the received indication, or it cannot fulfill the QoS requirements of PSDB and/or PSER, refer to Figure 4. If the network is deployed homogeneously, or Operations and Management (OAM) ensures the feature support consistency, the assigned criticality can be set to "ignore."

In another embodiment, the PSDB and PSER are signaled explicitly from the CN to the NG-RAN node, but that is mainly signaled from the CN for dynamic 5QI. But it may also be explicitly signaled for configured 5QI.

In another embodiment, if there are new Time-Sensitive Communication (TSC) Assistance Information (TSCAI) parameters associated with the XR service, this can be used as an XR QoS indication. However, it is then mandatory that the parameters are always present for XR service, which may not be the case.

In another embodiment, the PSDB and PSER are signaled explicitly and, when they are signaled, they overwrite any early values.

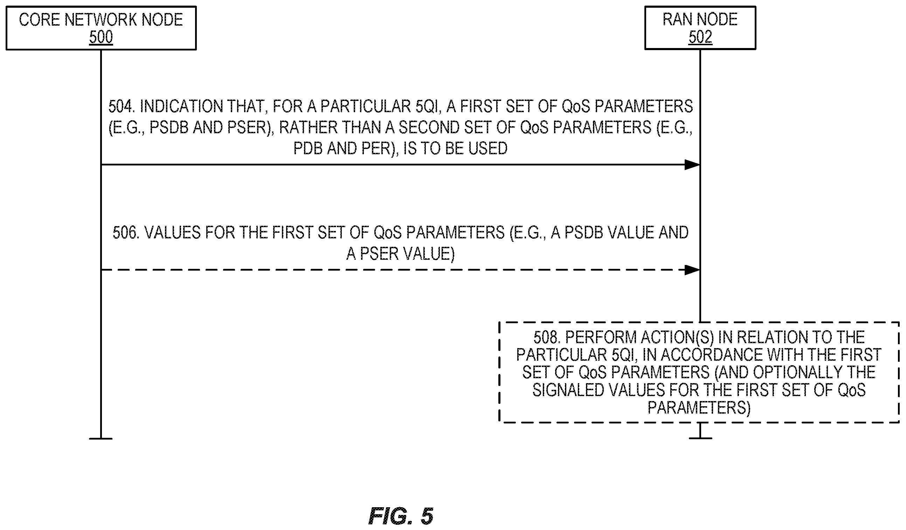

Figure 5 illustrates the operation of a core network node 500 and a RAN node 502 (e.g., a NG-RAN node such as a base station 102 or gNB) in accordance with at least some of the embodiments above. Optional steps are represented by dashed lines/boxes. As illustrated, the core network node 500 sends, to the RAN node 502, an indication that, for a particular 5QI (e.g., a given standardized or pre-configured 5QI), the RAN node 502 is to use a first set of QoS parameters (e.g., PSDB and PSER) rather than a second set of QoS parameters (e.g., PDB and PER) (step 504). In one embodiment, the first set of QoS parameters is a set of QoS parameters applicable to XR service, whereas the second set of QoS parameters is a usual (e.g., legacy) set of QoS parameters. In one embodiment, the indication of step 504 is an explicit indication (e.g., an explicit indicator in an IE such as, e.g., the XR QoS indicator in the example IE of Figure 4). In another embodiment, the indication of step 504 is an implicit indication such as, e.g., the presence of one or more parameters (e.g., one or more TSCAI parameters) associated with the XR service. Optionally, the core network node 500 also signals (e.g., explicitly) values for the first set of QoS parameters (e.g., a PSDB value and a PSER value) to the RAN node 502 (step 506). In one embodiment, the signaled values for the first set of QoS parameters overwrite any earlier values for the first set of QoS parameters. The RAN node 502 performs one or more actions in relation to the particular 5QI, in accordance with the first set of QoS parameters and optionally the signaled values for the first set of QoS parameters (step 508).

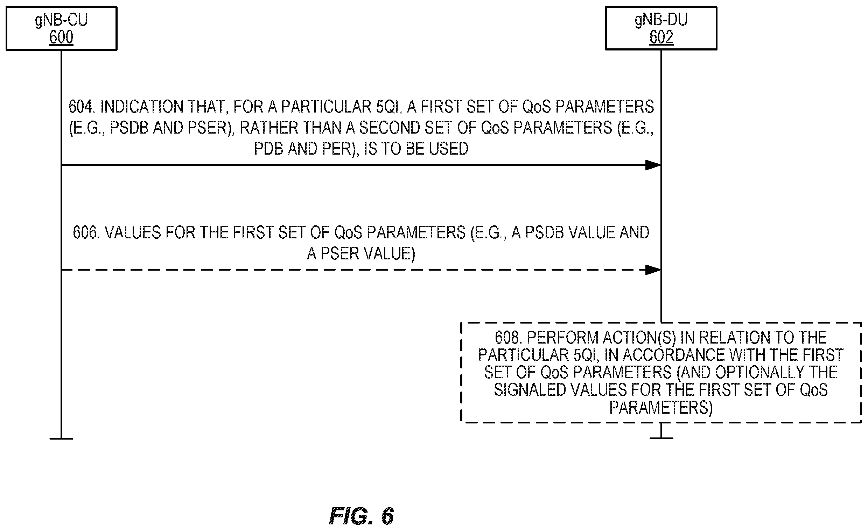

Embodiments of a solution within a RAN node (e.g., a NG-RAN node) are also disclosed. In this regard, Figure 6 illustrates a procedure performed by a RAN node in accordance with one embodiment of the present disclosure. Again, optional steps are represented by dashed lines/boxes. In this embodiment, the RAN node is a gNB and has a split architecture in which the gNB includes a gNB-Central Unit (CU) 600 and one or more gNB-Distributed Units (DUs) 602. In one embodiment, the gNB-CU 600 sends, to the gNB-DU 602 over F1AP, an indication (e.g., the "XR QoS Indicator") that, for a particular 5QI (e.g., a given standardized or pre-configured 5QI), the gNB-DU is to use a first set of QoS parameters (e.g., PSDB and PSER) rather than a second set of QoS parameters (e.g., PDB and PER) (step 604). In one embodiment, the first set of QoS parameters is a set of QoS parameters applicable to XR service, whereas the second set of QoS parameters is a usual (e.g., legacy) set of QoS parameters. In one embodiment, the indication sent from the gNB-CU 600 to the gNB-DU 602 in step 604 is an explicit indication (e.g., an explicit indicator in an IE such as, e.g., the XR QoS indicator in the example IE of Figure 4). In another embodiment, the indication sent from the gNB-CU 600 to the gNB-DU 602 in step 604 is an implicit indication such as, e.g., the presence of one or more parameters (e.g., one or more TSCAI parameters) associated with the XR service. Notably, the indication sent from the gNB-CU 600 to the gNB-DU 602 in step 604 may have been received by the gNB-CU in accordance with the process of Figure 5. Optionally, the gNB-CU 600 also signals (e.g., explicitly) values for the first set of QoS parameters (e.g., a PSDB value and a PSER value) to the gNB-DU (step 606). In one embodiment, the signaled values for the first set of QoS parameters overwrite any earlier values for the first set of QoS parameters. The gNB-DU 602 performs one or more actions in relation to the particular 5QI, in accordance with the first set of QoS parameters and optionally the signaled values for the first set of QoS parameters (step 608).

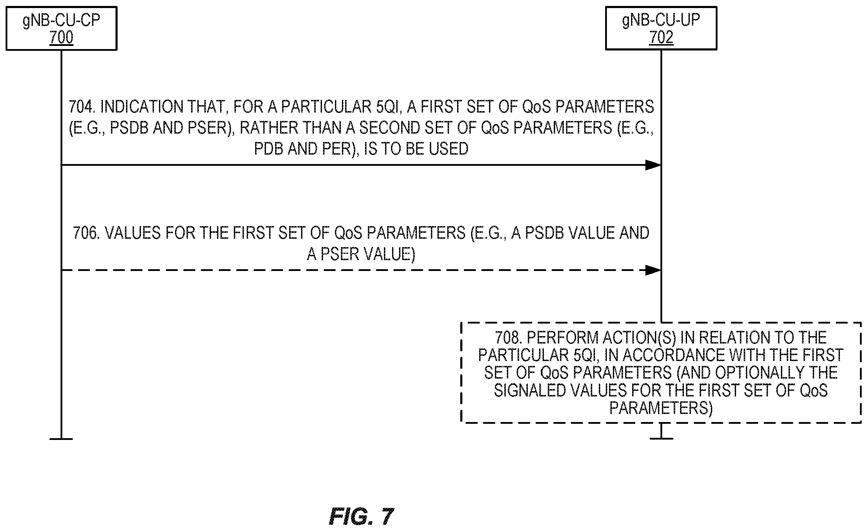

In one embodiment, the gNB-CU 600 includes a gNB-CU-Control Plane (CP) 700 and a gNB-CU-User Plane (UP) 702. As illustrated in Figure 7, the indication (e.g., the "XR QoS Indicator") that, for the particular 5QI (e.g., a given standardized or pre-configured 5QI), the first set of QoS parameters (e.g., PSDB and PSER) rather than a second set of QoS parameters (e.g., PDB and PER) is to be used is also sent from the gNB-CU-CP 700 to the gNB-CU-UP 702 (e.g., over E1AP) for the particular 5QI if the QoS is XR service (step 704). Again, in one embodiment, the first set of QoS parameters is a set of QoS parameters applicable to XR service, whereas the second set of QoS parameters is a usual (e.g., legacy) set of QoS parameters. In one embodiment, the indication sent from the gNB-CU-CP 700 to the gNB-CU-UP 702 in step 704 is an explicit indication (e.g., an explicit indicator in an IE such as, e.g., the XR QoS indicator in the example IE of Figure 4). In another embodiment, the indication sent from the gNB-CU-CP 700 to the gNB-CU-UP 702 in step 704 is an implicit indication such as, e.g., the presence of one or more parameters (e.g., one or more TSCAI parameters) associated with the XR service. Notably, the indication sent from the gNB-CU-CP 700 to the gNB-CU-UP 702 in step 704 may have been received by the gNB-CU-CP 700 in accordance with the process of Figure 5. Optionally, the gNB-CU-CP 700 also signals (e.g., explicitly) values for the first set of QoS parameters (e.g., a PSDB value and a PSER value) to the gNB-CU-UP 702 (step 706). In one embodiment, the signaled values for the first set of QoS parameters overwrite any earlier values for the first set of QoS parameters. The gNB-CU-UP 702 performs one or more actions in relation to the particular 5QI, in accordance with the first set of QoS parameters and optionally the signaled values for the first set of QoS parameters (step 708).

In one embodiment, during handover and context retrieval, a source/old NG-RAN node sends the aforementioned indication (e.g., the "XR QoS Indicator") to the target NG-RAN node/new NG-RAN node over XnAP for the particular 5QI if the QoS is XR service.

According to the claimed invention, a method is disclosed comprising: at a first network node: sending, to a second network node, an indication that a first set of Quality of Service, QoS, parameters, rather than a second set of QoS parameters, is to be used for a particular QoS indicator, wherein the first set of QoS parameters comprise a Protocol Data Unit, PDU, Set Delay Budget, PSDB, and a PDU-Set Error Rate, PSER, and wherein the second set of QoS parameters is a set of QoS parameters associated to a service other than the a XR service; at the second network node: receiving the indication; and performing one or more actions in relation to the particular QoS indicator, in accordance with the first set of QoS parameters.

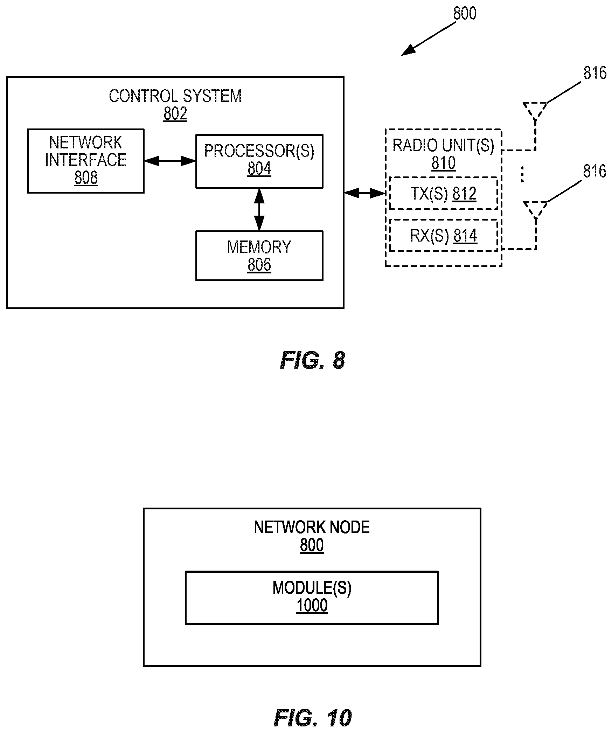

Figure 8 is a schematic block diagram of a network node 800 according to some embodiments of the present disclosure. Optional features are represented by dashed boxes. The network node 800 may be, for example, a core network node (e.g., the core network node 500) that implements all or part of the functionality of the CN or core network node (e.g., core network node 500) described above, or a RAN node (e.g., the RAN node 502, gNB-CU 600, gNB-DU 602, gNB-CU-CP 700, or gNB-CU-UP 702) that implements all or part of the functionality of the respective RAN node described herein. As illustrated, the network node 800 includes a control system 802 that includes one or more processors 804 (e.g., Central Processing Units (CPUs), Application Specific Integrated Circuits (ASICs), Field Programmable Gate Arrays (FPGAs), and/or the like), memory 806, and a network interface 808. The one or more processors 804 are also referred to herein as processing circuitry. In addition, if the network node 800 is a RAN node (e.g., a base station 102, gNB, or gNB-DU), the network node 800 may include one or more radio units 810 that each includes one or more transmitters 812 and one or more receivers 814 coupled to one or more antennas 816. The radio units 810 may be referred to or be part of radio interface circuitry. In some embodiments, the radio unit(s) 810 is external to the control system 802 and connected to the control system 802 via, e.g., a wired connection (e.g., an optical cable). However, in some other embodiments, the radio unit(s) 810 and potentially the antenna(s) 816 are integrated together with the control system 802. The one or more processors 804 operate to provide one or more functions of the network node 800 as described herein. In some embodiments, the function(s) are implemented in software that is stored, e.g., in the memory 806 and executed by the one or more processors 804.

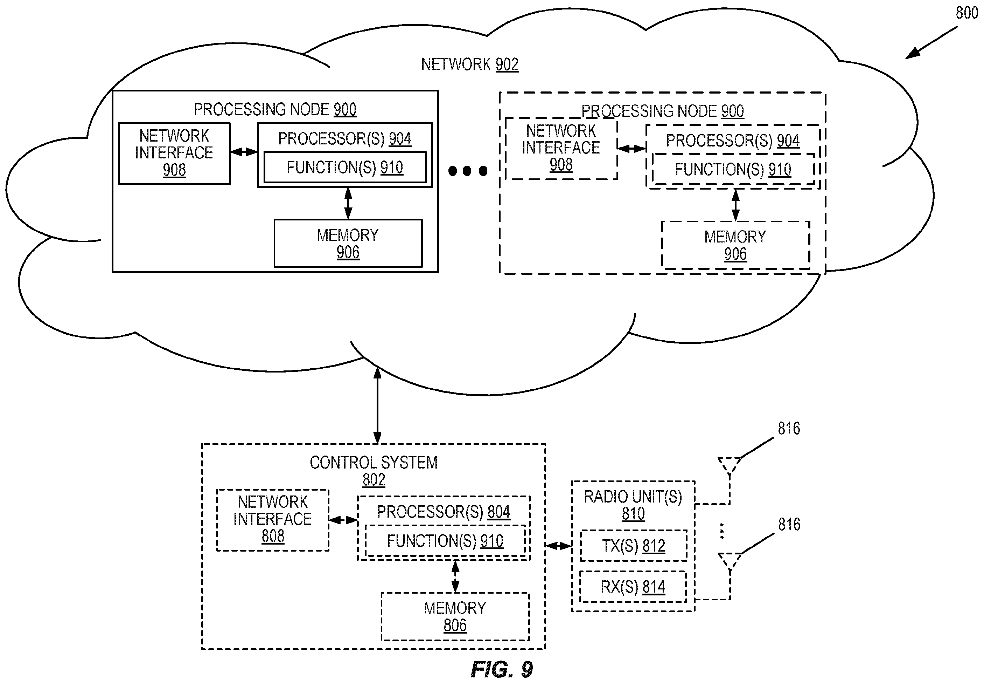

Figure 9 is a schematic block diagram that illustrates a virtualized embodiment of the network node 800 according to some embodiments of the present disclosure. Again, optional features are represented by dashed boxes. As used herein, a "virtualized" network node is an implementation of the network node 800 in which at least a portion of the functionality of the network node 800 is implemented as a virtual component(s) (e.g., via a virtual machine(s) executing on a physical processing node(s) in a network(s)). As illustrated, in this example, if the network node 800 is a RAN node, the network node 800 may include the control system 802 and/or the one or more radio units 810, as described above. The control system 802 may be connected to the radio unit(s) 810 via, for example, an optical cable or the like. The network node 800 includes one or more processing nodes 900 coupled to or included as part of a network(s) 902. If present, the control system 802 or the radio unit(s) are connected to the processing node(s) 900 via the network 902. Each processing node 900 includes one or more processors 904 (e.g., CPUs, ASICs, FPGAs, and/or the like), memory 906, and a network interface 908.

In this example, functions 910 of the network node 800 described herein are implemented at the one or more processing nodes 900 or distributed across the one or more processing nodes 900 and the control system 802 and/or the radio unit(s) 810 in any desired manner. In some particular embodiments, some or all of the functions 910 of the network node 800 described herein are implemented as virtual components executed by one or more virtual machines implemented in a virtual environment(s) hosted by the processing node(s) 900. As will be appreciated by one of ordinary skill in the art, additional signaling or communication between the processing node(s) 900 and the control system 802 is used in order to carry out at least some of the desired functions 910. Notably, in some embodiments, the control system 802 may not be included, in which case the radio unit(s) 810 communicate directly with the processing node(s) 900 via an appropriate network interface(s).

In some embodiments, a computer program including instructions which, when executed by at least one processor, causes the at least one processor to carry out the functionality of the network node 800 or a node (e.g., a processing node 900) implementing one or more of the functions 910 of the network node 800 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 10 is a schematic block diagram of the network node 800 according to some other embodiments of the present disclosure. The network node 800 includes one or more modules 1000, each of which is implemented in software. The module(s) 1000 provide the functionality of the network node 800 described herein. This discussion is equally applicable to the processing node 900 of Figure 9 where the modules 1000 may be implemented at one of the processing nodes 900 or distributed across multiple processing nodes 900 and/or distributed across the processing node(s) 900 and the control system 802.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according to one or more embodiments of the present disclosure.

## Claims

1. A method comprising:
• at a first network node (500; 600; 700):
∘ sending (504; 604; 704), to a second network node (502; 602; 702), an indication that a first set of Quality of Service, QoS, parameters, rather than a second set of QoS parameters, is to be used for a particular QoS indicator, wherein the first set of QoS parameters comprise a Protocol Data Unit, PDU, Set Delay Budget, PSDB, and a PDU-Set Error Rate, PSER, and wherein the second set of QoS parameters is a set of QoS parameters associated to a service other than an eXtended Reality, XR, service;
• at the second network node (502; 602; 702):
∘ receiving (504; 604; 704) the indication; and
∘ performing (508; 608; 708) one or more actions in relation to the particular QoS indicator, in accordance with the first set of QoS parameters.

2. The method of claim 1, wherein the particular QoS indicator is a particular 5^{th} Generation, 5G, QoS Indicator, 5QI.

3. The method of claim 1 or 2, wherein the first set of QoS parameters is a set of QoS parameters associated to an eXtended Reality, XR, service.

4. The method of claim 1, wherein the second set of QoS parameters comprise a Packet Delay Budget, PDB, and a Packet Error Rate, PER.

5. The method of any of claims 1 to 4, further comprising, at the first network node (500; 600; 700), sending (506; 606; 706), to the second network node (502; 602; 702), values for the first set of QoS parameters.

6. The method of claim 5, further comprising, at the second network node (502; 602; 702): receiving (506; 606; 706) the values for the first set of QoS parameters;
wherein performing (508; 608; 708) the one or more actions in relation to the particular QoS indicator comprises performing (508; 608; 708) the one or more actions in relation to the particular QoS indicator, in accordance with the first set of QoS parameters and the values received for the first set of QoS parameters.

7. The method of any of claims 1 to 6, wherein the first network node (500) is a core network node (500), and the second network node (502) is a Radio Access Network, RAN, node (502).

8. A method performed by a first network node (500; 600; 700), the method comprising:
sending (504; 604; 704), to a second network node (502; 602; 702), an indication that a first set of Quality of Service, QoS, parameters, rather than a second set of QoS parameters, is to be used for a particular QoS indicator, wherein the first set of QoS parameters comprise a Protocol Data Unit, PDU, Set Delay Budget, PSDB, and a PDU-Set Error Rate, PSER, and wherein the second set of QoS parameters is a set of QoS parameters associated to a service other than an eXtended Reality, XR, service.

9. The method of claim 8, further comprising sending (506; 606; 706), to the second network node (502; 602; 702), values for the first set of QoS parameters.

10. A first network node (500; 600; 700) adapted to:
send (504; 604; 704), to a second network node (502; 602; 702), an indication that a first set of Quality of Service, QoS, parameters, rather than a second set of QoS parameters, is to be used for a particular Quality of Service, QoS, indicator, wherein the first set of QoS parameters comprise a Protocol Data Unit, PDU, Set Delay Budget, PSDB, and a PDU-Set Error Rate, PSER, and wherein the second set of QoS parameters is a set of QoS parameters associated to a service other than an eXtended Reality, XR, service.

11. The first network node (500; 600; 700) of claim 10, further adapted to perform the method of claim 9.

12. A method performed by a second network node (502; 602; 702), the method comprising:
receiving (504; 604; 704), from a first network node (500; 600; 700), an indication that a first set of Quality of Service, QoS, parameters, rather than a second set of QoS parameters, is to be used for a particular QoS indicator, wherein the first set of QoS parameters comprise a Protocol Data Unit, PDU, Set Delay Budget, PSDB, and a PDU-Set Error Rate, PSER, and wherein the second set of QoS parameters is a set of QoS parameters associated to a service other than an eXtended Reality, XR, service; and
performing (508; 608; 708) one or more actions in relation to the particular QoS indicator, in accordance with the first set of QoS parameters.

13. The method of claim 12, further comprising:
receiving (506; 606; 706) values for the first set of QoS parameters from the first network node (500; 600; 700);
wherein performing (508; 608; 708) the one or more actions in relation to the particular QoS indicator comprises performing (508; 608; 708) the one or more actions in relation to the particular QoS indicator, in accordance with the first set of QoS parameters and the values received for the first set of QoS parameters.

14. A second network node (502; 602; 702) adapted to:
receive (504; 604; 704), from a first network node (500; 600; 700), an indication that a first set of Quality of Service, QoS, parameters, rather than a second set of QoS parameters, is to be used for a particular QoS indicator, wherein the first set of QoS parameters comprise a Protocol Data Unit, PDU, Set Delay Budget, PSDB, and a PDU-Set Error Rate, PSER, and wherein the second set of QoS parameters is a set of QoS parameters associated to a service other than an eXtended Reality, XR, service; and
perform (508; 608; 708) one or more actions in relation to the particular QoS indicator, in accordance with the first set of QoS parameters.

15. The second network node (502; 602; 702) of claim 14, further adapted to perform the method of claim 13.

## Patentansprüche

1. Verfahren, umfassend:
• an einem ersten Netzwerkknoten (500; 600; 700):
∘ Senden (504; 604; 704) einer Angabe an einen zweiten Netzwerkknoten (502; 602; 702), dass ein erster Satz von Dienstqualitätsparametern, QoS-Parametern, anstelle eines zweiten Satzes von QoS-Parametern für einen spezifischen QoS-Indikator verwendet werden soll, wobei der erste Satz von QoS-Parameters ein Protokolldateneinheits-,PDU-,Set Delay Budget, PSDB, und eine PDU-Set Error Rate, PSER, umfasst, und wobei der zweite Satz von QoS-Parameter ein Satz von QoS-Parametern ist, der mit einem anderen Dienst als einem eXtended Reality-Dienst, XR-Dienst, assoziiert ist;
• an dem zweiten Netzwerkknoten (502; 602; 702):
∘ Empfangen (504; 604; 704) der Angabe und
∘ Durchführen (508; 608; 708) einer oder mehrerer Aktionen in Bezug auf den spezifischen QoS-Indikator gemäß dem ersten Satz von QoS-Parametern.

2. Verfahren nach Anspruch 1, wobei der spezifische QoS-Indikator ein spezifischer QoS-Indikator, 5QI, der 5. Generation, 5G, ist.

3. Verfahren nach Anspruch 1 oder 2, wobei der erste Satz von QoS-Parametern ein Satz von QoS-Parametern ist, der mit einem eXtended Reality-Dienst, XR-Dienst, assoziiert ist.

4. Verfahren nach Anspruch 1, wobei der zweite Satz von QoS-Parametern ein Paketverzögerungsbudget, PDB, und eine Paketfehlerrate, PER, umfasst.

5. Verfahren nach einem Ansprüche 1 bis 4, ferner umfassend an dem ersten Netzwerkknoten (500; 600; 700) Senden (506; 606; 706) von Werten für den ersten Satz QoS-Parametern an den zweiten Netzwerkknoten (502; 602; 702) .

6. Verfahren nach Anspruch 5, ferner umfassend an dem zweiten Netzwerkknoten (502; 602; 702):
Empfangen (506; 606; 706) der Werte für den ersten Satz von QoS-Parametern;
wobei das Durchführen (508; 608; 708) der einen oder der mehreren Aktionen in Bezug auf den spezifischen QoS-Indikator Durchführen (508; 608; 708) der einen oder der mehreren Aktionen in Bezug auf den spezifischen QoS-Indikator gemäß dem ersten Satz von QoS-Parametern und den für den ersten Satz von QoS-Parametern empfangenen Werten umfasst.

7. Verfahren nach einem der Ansprüche 1 bis 6, wobei der erste Netzwerkknoten (500) ein Kernnetzwerkknoten (500) ist und der zweite Netzwerkknoten (502) ein Funkzugangsnetzwerkknoten, RAN-Knoten, (502) ist.

8. Verfahren, das von einem ersten Netzwerkknoten (500; 600; 700) durchgeführt wird, wobei das Verfahren Folgendes umfasst:
Senden (504; 604; 704) einer Angabe an einen zweiten Netzwerkknoten (502; 602; 702), dass ein erster Satz von Dienstqualitätsparametern, QoS-Parametern, anstelle eines zweiten Satzes von QoS-Parametern für einen spezifischen QoS-Indikator verwendet werden soll, wobei der erste Satz von QoS-Parameters ein Protokolldateneinheits-,PDU-,Set Delay Budget, PSDB, und eine PDU-Set Error Rate, PSER, umfasst, und wobei der zweite Satz von QoS-Parameter ein Satz von QoS-Parametern ist, der mit einem anderen Dienst als einem eXtended Reality-Dienst, XR-Dienst, assoziiert ist.

9. Verfahren nach Anspruch 8, ferner umfassend Senden (506; 606; 706) von Werten für den ersten Satz QoS-Parametern an den zweiten Netzwerkknoten (502; 602; 702) .

10. Erster Netzwerkknoten (500; 600, 700), der zu Folgendem ausgelegt ist:
Senden (504; 604; 704) einer Angabe an einen zweiten Netzwerkknoten (502; 602; 702), dass ein erster Satz von Dienstqualitätsparametern, QoS-Parametern, anstelle eines zweiten Satzes von QoS-Parametern für einen spezifischen Dienstqualitätsindikator, QoS-Indikator, verwendet werden soll, wobei der erste Satz von QoS-Parameters ein Protokolldateneinheits-,PDU-,Set Delay Budget, PSDB, und eine PDU-Set Error Rate, PSER, umfasst, und wobei der zweite Satz von QoS-Parameter ein Satz von QoS-Parametern ist, der mit einem anderen Dienst als einem eXtended Reality-Dienst, XR-Dienst, assoziiert ist.

11. Erster Netzwerkknoten (500; 600; 700) nach Anspruch 10, der ferner zum Durchführen des Verfahrens nach Anspruch 9 ausgelegt ist.

12. Verfahren, das von einem zweiten Netzwerkknoten (502; 602; 702) durchgeführt wird, wobei das Verfahren Folgendes umfasst:
Empfangen (504; 604; 704) einer Angabe von einen ersten Netzwerkknoten (500; 600; 700), dass ein erster Satz von Dienstqualitätsparametern, QoS-Parametern, anstelle eines zweiten Satzes von QoS-Parametern für einen spezifischen QoS-Indikator verwendet werden soll, wobei der erste Satz von QoS-Parameters ein Protokolldateneinheits-,PDU-,Set Delay Budget, PSDB, und eine PDU-Set Error Rate, PSER, umfasst, und wobei der zweite Satz von QoS-Parameter ein Satz von QoS-Parametern ist, der mit einem anderen Dienst als einem eXtended Reality-Dienst, XR-Dienst, assoziiert ist; und
Durchführen (508; 608; 708) einer oder mehrerer Aktionen in Bezug auf den spezifischen QoS-Indikator gemäß dem ersten Satz von QoS-Parametern.

13. Verfahren nach Anspruch 12, ferner umfassend:
Empfangen (506; 606; 706) von Werten für den ersten Satz von QoS-Parametern von dem ersten Netzwerkknoten (500; 600; 700);
wobei das Durchführen (508; 608; 708) der einen oder der mehreren Aktionen in Bezug auf den spezifischen QoS-Indikator Durchführen (508; 608; 708) der einen oder der mehreren Aktionen in Bezug auf den spezifischen QoS-Indikator gemäß dem ersten Satz von QoS-Parametern und den für den ersten Satz von QoS-Parametern empfangenen Werten umfasst.

14. Zweiter Netzwerkknoten (502; 602, 702), der zu Folgendem ausgelegt ist:
Empfangen (504; 604; 704) einer Angabe von einem ersten Netzwerkknoten (500; 600; 700), dass ein erster Satz von Dienstqualitätsparametern, QoS-Parametern, anstelle eines zweiten Satzes von QoS-Parametern für einen spezifischen QoS-Indikator verwendet werden soll, wobei der erste Satz von QoS-Parameters ein Protokolldateneinheits-,PDU-,Set Delay Budget, PSDB, und eine PDU-Set Error Rate, PSER, umfasst, und wobei der zweite Satz von QoS-Parameter ein Satz von QoS-Parametern ist, der mit einem anderen Dienst als einem eXtended Reality-Dienst, XR-Dienst, assoziiert ist, und
Durchführen (508; 608; 708) einer oder mehrerer Aktionen in Bezug auf den spezifischen QoS-Indikator gemäß dem ersten Satz von QoS-Parametern.

15. Zweiter Netzwerkknoten (502; 602; 702) nach Anspruch 14, der ferner zum Durchführen des Verfahrens nach Anspruch 13 ausgelegt ist.

## Revendications

1. Procédé comprenant :
• au niveau d'un premier nœud de réseau (500 ; 600 ; 700) :
∘ l'envoi (504 ; 604 ; 704), à un deuxième nœud de réseau (502 ; 602 ; 702), d'une indication qu'un premier ensemble de paramètres de qualité de service, QoS, au lieu d'un deuxième ensemble de paramètres QoS, doit être utilisé pour un indicateur QoS particulier, dans lequel le premier ensemble de paramètres QoS comprend un budget de retard d'ensemble d'unités de données de protocole, PDU, PSDB, et un taux d'erreur d'ensemble de PDU, PSER, et dans lequel le deuxième ensemble de paramètres QoS est un ensemble de paramètres QoS associés à un service autre qu'un service de réalité étendue, XR ;
• au niveau du deuxième nœud de réseau (502 ; 602 ; 702) :
∘ la réception (504 ; 604 ; 704) de l'indication ; et
∘ la réalisation (508 ; 608 ; 708) d'une ou plusieurs actions en relation avec l'indicateur de QoS particulier, en fonction du premier ensemble de paramètres QoS.

2. Procédé selon la revendication 1, dans lequel l'indicateur QoS particulier est un indicateur QoS de cinquième génération, 5G, 5QI, particulier.

3. Procédé selon la revendication 1 ou 2, dans lequel le premier ensemble de paramètres QoS est un ensemble de paramètres QoS associés à un service de réalité étendue, XR.

4. Procédé selon la revendication 1, dans lequel le deuxième ensemble de paramètres QoS comprend un budget de retard de paquets, PDB, et un taux d'erreur de paquets, PER.

5. Procédé selon l'une quelconque des revendications 1 à 4, comprenant en outre, au niveau du premier nœud de réseau (500 ; 600 ; 700), l'envoi (506 ; 606 ; 706), au deuxième nœud de réseau (502 ; 602 ; 702), de valeurs pour le premier ensemble de paramètres QoS.

6. Procédé selon la revendication 5, comprenant en outre, au niveau du deuxième nœud de réseau (502 ; 602 ; 702) : la réception (506 ; 606 ; 706) des valeurs pour le premier ensemble de paramètres QoS ;
dans lequel la réalisation (508 ; 608 ; 708) des une ou plusieurs actions en relation avec l'indicateur QoS particulier comprend la réalisation (508 ; 608 ; 708) des une ou plusieurs actions en relation avec l'indicateur QoS particulier, en fonction du premier ensemble de paramètres QoS et des valeurs reçues pour le premier ensemble de paramètres QoS.

7. Procédé selon l'une quelconque des revendications 1 à 6, dans lequel le premier nœud de réseau (500) est un nœud de réseau central (500), et le deuxième nœud de réseau (502) est un nœud de réseau d'accès radio, RAN, (502) .

8. Procédé réalisé par un premier nœud de réseau (500 ; 600 ; 700), le procédé comprenant :
l'envoi (504 ; 604 ; 704), à un deuxième nœud de réseau (502 ; 602 ; 702), d'une indication qu'un premier ensemble de paramètres de qualité de service, QoS, au lieu d'un deuxième ensemble de paramètres QoS, doit être utilisé pour un indicateur QoS particulier, dans lequel le premier ensemble de paramètres QoS comprend un budget de retard d'ensemble d'unités de données de protocole, PDU, PSDB, et un taux d'erreur d'ensemble de PDU, PSER, et dans lequel le deuxième ensemble de paramètres QoS est un ensemble de paramètres QoS associés à un service autre qu'un service de réalité étendue, XR.

9. Procédé selon la revendication 8, comprenant en outre l'envoi (506 ; 606 ; 706), au deuxième nœud de réseau (502 ; 602 ; 702), de valeurs pour le premier ensemble de paramètres QoS.

10. Premier nœud de réseau (500 ; 600 ; 700) adapté pour : envoyer (504 ; 604 ; 704), à un deuxième nœud de réseau (502 ; 602 ; 702), une indication qu'un premier ensemble de paramètres de qualité de service, QoS, au lieu d'un deuxième ensemble de paramètres QoS, doit être utilisé pour un indicateur de qualité de service, QoS, particulier, dans lequel le premier ensemble de paramètres QoS comprend un budget de retard d'ensemble d'unités de données de protocole, PDU, PSDB, et un taux d'erreur d'ensemble de PDU, PSER, et dans lequel le deuxième ensemble de paramètres QoS est un ensemble de paramètres QoS associés à un service autre qu'un service de réalité étendue, XR.

11. Premier nœud de réseau (500 ; 600 ; 700) selon la revendication 10, en outre adapté pour réaliser le procédé selon la revendication 9.

12. Procédé réalisé par un deuxième nœud de réseau (502 ; 602 ; 702), le procédé comprenant :
la réception (504 ; 604 ; 704), depuis un premier nœud de réseau (500 ; 600 ; 700), d'une indication qu'un premier ensemble de paramètres de qualité de service, QoS, au lieu d'un deuxième ensemble de paramètres QoS, doit être utilisé pour un indicateur QoS particulier, dans lequel le premier ensemble de paramètres QoS comprend un budget de retard d'ensemble d'unités de données de protocole, PDU, PSDB, et un taux d'erreur d'ensemble de PDU, PSER, et dans lequel le deuxième ensemble de paramètres QoS est un ensemble de paramètres QoS associés à un service autre qu'un service de réalité étendue, XR ; et
la réalisation (508 ; 608 ; 708) d'une ou plusieurs actions en relation avec l'indicateur QoS particulier, en fonction du premier ensemble de paramètres QoS.

13. Procédé selon la revendication 12, comprenant en outre :
la réception (506 ; 606 ; 706) de valeurs pour le premier ensemble de paramètres QoS depuis le premier nœud de réseau (500 ; 600 ; 700) ;
dans lequel la réalisation (508 ; 608 ; 708) des une ou plusieurs actions en relation avec l'indicateur QoS particulier comprend la réalisation (508 ; 608 ; 708) des une ou plusieurs actions en relation avec l'indicateur QoS particulier, en fonction du premier ensemble de paramètres QoS et des valeurs reçues pour le premier ensemble de paramètres QoS.

14. Deuxième nœud de réseau (502 ; 602 ; 702) adapté pour : recevoir (504 ; 604 ; 704), depuis un premier nœud de réseau (500 ; 600 ; 700), une indication qu'un premier ensemble de paramètres de qualité de service, QoS, au lieu d'un deuxième ensemble de paramètres QoS, doit être utilisé pour un indicateur QoS particulier, dans lequel le premier ensemble de paramètres QoS comprend un budget de retard d'ensemble d'unités de données de protocole, PDU, PSDB, et un taux d'erreur d'ensemble de PDU, PSER, et dans lequel le deuxième ensemble de paramètres QoS est un ensemble de paramètres QoS associés à un service autre qu'un service de réalité étendue, XR ; et
réaliser (508 ; 608 ; 708) une ou plusieurs actions en relation avec l'indicateur QoS particulier, en fonction du premier ensemble de paramètres QoS.

15. Deuxième nœud de réseau (502 ; 602 ; 702) selon la revendication 14, adapté en outre pour réaliser le procédé selon la revendication 13.
